# EUROPEAN PATENT APPLICATION

(11) **EP 1 195 578 A2**
(43) Date of publication of application: **10.04.2002**
(21) Application number: 01308367.0
(22) Date of filing: 01.10.2001
(51) Int. Cl.: G01C 21/36

(54) **Vehicle navigation system with stereoscopic display**

(30) Priority: 03.10.2000 JP 2000303686
(71) Applicant: Matsushita Electric Industrial Co., Ltd., Kadoma-shi, Osaka-fu, 571-8501 (JP)
(72) Inventor: Yuda, Masato, Osaka-shi, Osaka-fu, 532-0022 (JP); Mochizuki, Yoshiyuki, Suita-shi, Osaka-fu, 564-0025 (JP); Nishimura, Kenji, Nabari-shi, Mei-ken, 518-0646 (JP)
(74) Representative: Rackham, Stephen Neil

(57) **Abstract**

An apparatus for navigating a moving object is provided for easing the action of an operator of the moving object. The apparatus has a map data acquiring section (1), a current position data acquiring section (2), an optimum route searching section (3) for calculating an optimum route data from the map data, a forward map data acquiring section (4) for generating a forward map data from the current position data and the optimum route data, a route navigation symbol data drawing section (5) for generating a route navigation symbol image from the forward map data, and a stereoscopic image displaying section (6) for displaying a three-dimensional form of the route navigation symbol image.

## Description

The present invention relates to a moving object navigating apparatus for directing the movement of a driver of a mobile unit such as a vehicle.

A variety of moving object navigating apparatuses for air crafts, vessels, and automobiles as well as carried by persons have been proposed as navigation systems with the help of a GPS (global positioning system).

Such a moving object navigating apparatus is designed for receiving wave signals from GPS satellites to find its position and monitoring a map data of the position read out from a storage device (e.g. a CD-ROM or DVD-ROM) and displayed on a display.

Another moving object navigating apparatus with a pass finding function is capable of determining and directing the shortest path from a current position to a target position through displaying an enlarged map at each crossroads and instructing the direction of a moving object, namely a vehicle, with voice sounds.

The driver hardly drives the vehicle while watching the screen of the display and can thus be aided with the navigation by voice sounds. However, when navigated with not only the voice sounds but also relevant images, the driver can acknowledge the direction more explicitly. One of such conventional-moving object navigating apparatuses is disclosed in Japanese Patent Laid-Open Publication No. 2000-113389.

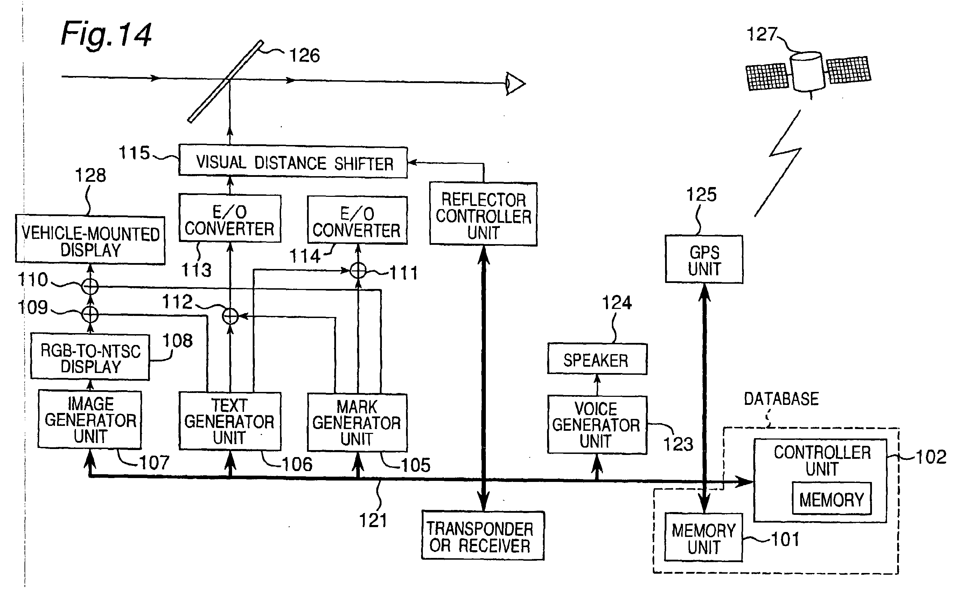

The conventional moving object navigating apparatus disclosed in the above Publication will be explained referring to Fig. 14. A GPS unit 125 receives a wave signal from a GPS satellite 127 and calculates its position from the signal. A position data about the current position is then transferred via a data bus 121 to a control unit 102.

In response to the position data from the GPS unit 125, the control unit 102 reads out its relevant image data (for example, a map data) from a memory unit 101 and delivers the same via the data bus 121 to an image generator unit 107, a text generator unit 106, and a mark generator unit 105.

The mark generator unit 105 generates from the position data from the memory unit 101 a mark signal for a front panel 126 (including the arrow indicative of the direction) and a mark signal for a vehicle-mounted display 128 (including signs for the direction of a turn and a detour at traffic jam) which are then transferred to adders 111 and 112.

The image generator unit 107 generates a video signal or an image data which is saved in its built-in CG buffer. The image data saved in the CG buffer is delivered to a converter 108 where it is converted into a video signal of the NTSC format and transferred to an adder 109.

The text generator unit 106 generates a text signal for the front panel 126 (including the name of a crossroads) and a text signal for the vehicle-mounted display 128 (including parking data, traffic control data, and traffic jam data) which are then transferred to the adders 109, 111, and 112.

The text signal of text data from the text generator unit 106 and the mark signal of mark data from the mark generator unit 105 are combined by each of the adders 111 and 112. Resultant sum signals are received by E/O converters 114 and 113.

The text signal of text data from the text generator unit 106 is combined with the video signal of image data by the adder 109 and then added with the mark signal of mark data from the mark generator unit 105 before displayed on the vehicle-mounted display 128.

The E/O converter 113 converts the output of the adder 112 into an optical signal which is received by a visual distance shifter 115. Similarly, the E/O converter 114 converts the output of the adder 111 into an optical signal which is received by the visual distance shifter 115. Those optical signals are processed by the visual distance shifter 115 and projected on the front panel 126.

An audio generator unit 123 generates a voice signal from data of the route to the destination determined by the control unit 102 and received via the data bus 121. The voice signal is released as sounds from a loudspeaker 124.

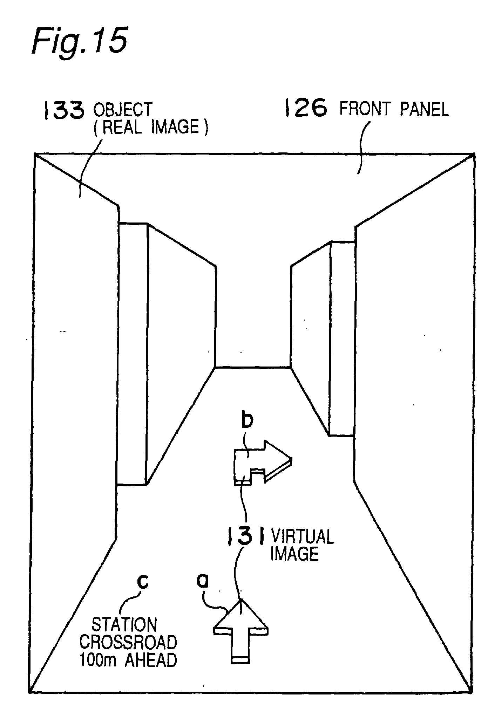

Fig. 15 illustrates indices or marks generated by the mark generator unit 105 shown in Fig. 14 and a text data generated by the text generator unit 106, where a real image 133 and a virtual image 131 are combined. The virtual image 131 includes an arrow a showing the current position, an arrow b showing the moving speed and direction, and a text data c such as the name of a crossroads.

The conventional moving object navigating apparatus has the front panel 126 made of a half mirror for displaying a minimum of navigation data, which includes the name of each crossroads and the moving direction in the form of an arrow, and the vehicle-mounted display 128 provided for displaying other navigation data about detailed maps and traffic jam information. This allows the driver to correctly follow the direction to a destination without turning its face aside.

However, the half mirror of the front panel 126 in the conventional moving object navigating apparatus transmits the real image 133 but reflects the virtual image 131. The transparency and the reflectivity of the half mirror have a trade-off relationship, one increasing and the other decreasing. It is impossible to increase both. When the transparency of the half mirror is high at day time, i.e. the outside is bright, the driver can view the virtual image 131 with much difficulty. When the reflectivity of the half mirror is high at night time, i.e. the outside is dark, the driver can view the real image 133 with much difficulty. It is hardly possible to view the real image 133 and the virtual 131 at the same time. In particular, it is unsafe for the driver to ambiguously view the real image 133 at night time and thus suffer from physical overloading.

The present invention has been developed for eliminating the foregoing drawback and its object is to provide a moving object navigating apparatus where a real image and a virtual image can explicitly be viewed at the same time. Another object of the present invention is to provide a moving object navigating apparatus which can be handled by an operator with ease.

For achievement of the above object, an apparatus for navigating a moving object according to the first aspect of the present invention is provided including, (i) a map data acquiring section for acquiring a map data, (ii) a current position data acquiring section for acquiring a current position data, (iii) an optimum route searching section for calculating an optimum route data from the map data received from the map data acquiring section, (iv) a forward map data acquiring section for generating a forward map data from the current position data received from the current position data acquiring section and the optimum route data received from the optimum route searching section, (v) a route navigation symbol drawing section for generating a route navigation symbol image from the forward map data received from the forward map data acquiring section, (vi) and a stereoscopic image displaying section (or member) for displaying a three-dimensional form of the route navigation symbol image generated by the route navigation symbol drawing section.

According to the second aspect of the present invention, the apparatus of the first aspect further includes, (vii) an optimum route drawing section for generating a map image from the map data received from the map data acquiring section, generating an optimum route image from the optimum route data received from the optimum route searching section, and combining the map image and the optimum route image to generate an optimum route composite image, (viii) a plane image displaying section for displaying a two-dimensional form of the optimum route composite image received from the optimum route drawing section, and (ix) a synchronization controlling section for synchronizing between the stereoscopic image displaying section and the plane image displaying section.

According to the third aspect of the present invention, the apparatus of the first aspect further includes (x) a voice generating section for generating a navigating voice sound or an alarming voice sound from the map data received from the forward map data acquiring section, (xi) a voice playback section for playing back the navigating voice sound or the alarming voice sound received from the voice generating section, and (xii) a synchronization controlling section for synchronizing between the voice sound playback action of the voice playback section and the image displaying action of the stereoscopic image displaying section.

According to the fourth aspect of the present invention, the apparatus of the second aspect further includes (xiii) a voice generating section for generating a navigating voice sound or an alarming voice sound from the map data received from the forward map data acquiring section, and (xiv) a voice playback section for playing back the navigating voice sound or the alarming voice sound received from the voice generating section, wherein (xv) the synchronization controlling section synchronizes between the voice sound playback action of the voice playback section and the image displaying action of the stereoscopic image displaying section.

According to the fifth aspect of the present invention, the apparatus of the first aspect is modified in which the route navigation symbol drawing section includes a route navigation symbol data generating section for generating a route navigation symbol data from the forward map data received from the forward map data acquiring section, and a route navigation symbol image generating section for generating a route navigation symbol image from the route navigation symbol data received from the route navigation symbol data generating section.

According to the sixth aspect of the present invention, the apparatus of the first aspect is modified in which the stereoscopic image displaying section includes, a parallax beam generating section for generating parallax beams to display the route navigation symbol image generated by the route navigation symbol drawing section, and a parallax image displaying section for diffracting the parallax beams generated by the parallax beam generating section to display the route navigation symbol image.

According to the seventh aspect of the present invention, the apparatus of the fifth aspect is modified in which the route navigation symbol data generating section generates from the forward map data received from the forward map data acquiring section a route navigation symbol data which consists mainly of symbol model information, traffic sign identification display information, moving direction identification display information, and visual field data.

According to the eighth aspect of the present invention, the apparatus of the seventh aspect is modified in which the route navigation symbol data generating section generates from the forward map data received from the forward map data acquiring section a route navigation symbol data which includes ambient information.

According to the ninth aspect of the present invention, the apparatus according to claim 7 or 8 is modified in which the symbol model information in the route navigation symbol data generated by the route navigation symbol data generating section has a shape of the moving object for displaying a route navigation data.

According the tenth aspect of the present invention, the apparatus of the fifth aspect is modified in which the route navigation symbol data generating section generates a route navigation symbol data which includes route direction identification information for instructing an operator of the moving object with the route direction data received from the forward map data acquiring section.

According to the eleventh aspect of the present invention, the apparatus of the fifth aspect is modified in which the route navigation symbol data generating section generates a route navigation symbol data which includes traffic sign identification information for instructing an operator of the moving object with the traffic sign data in the forward map data received from the forward map data acquiring section.

According to twelfth aspect of the present invention, the apparatus of the fifth aspect is modified in which the route navigation symbol data generating section generates an updated route navigation symbol data when the moving object runs off the route determined by the optimum route data received from the optimum route searching section.

According to the thirteenth aspect of the present invention, the apparatus of the sixth aspect is modified in which the parallax beam generating section is a liquid crystal display unit and the parallax image displaying section is a holographic optical element.

According to the fourteenth aspect of the present invention, the apparatus of the sixth aspect is modified in which the stereoscopic image displaying section includes a group of parallax beam generating sections corresponding to the predetermined number of stereoscopic visible areas.

According to the fifteenth aspect of the present invention, the apparatus of the sixth aspect is modified in which the parallax image displaying section is a holographic optical element where parallax beams generated by the parallax beam generating section are diffracted and perceived in different modes by eyes of an operator of the moving object who can thus view the route navigation symbol image overlapped with the actual scenery background.

According to the sixteenth aspect of the present invention, the apparatus of the sixth aspect is modified in which the parallax image displaying section is disposed in front of the moving object or across the viewing line of the operator of the moving object.

The moving object navigating apparatus of the present invention allows the operator of the moving object to acknowledge the direction with much ease while controlling the moving object, thus improving the safety.

According to the seventeenth aspect of the present invention, there is provided a method of navigating a moving object including the steps of (i) acquiring a map data, (ii) acquiring a current position data, (iii) calculating an optimum route data from the map data, (iv) generating a forward map data from the current position data and the optimum route data, (v) generating a route navigation symbol image from the forward map data, and (vi) displaying a three-dimensional form of the route navigation symbol image, wherein (vii) the step of generating the route navigation symbol image includes the steps of generating a route navigation symbol data from the forward map data, and generating a route navigation symbol image from the route navigation symbol data.

According to the eighteenth aspect of the present invention, there is provided a method of navigating a moving object including the steps of (i) acquiring a map data, (ii) acquiring a current position data, (iii) calculating an optimum route data from the map data, (iv) generating a forward map data from the current position data and the optimum route data, (v) generating a route navigation symbol image from the forward map data, and (vi) displaying a three-dimensional form of the route navigation symbol image, wherein (vii) the step of displaying the route navigation symbol image includes the steps of generating parallax beams to display the route navigation symbol image, and diffracting the parallax beams to display the route navigation symbol image.

According to another aspect of the present invention, there is provided a program for making a computer execute a procedure for navigating a moving object, or a storage medium for storing the program. The procedure includes the steps of (i) acquiring a map data, (ii) acquiring a current position data, (iii) calculating an optimum route data from the map data, (iv) generating a forward map data from the current position data and the optimum route data, (v) generating a route navigation symbol image from the forward map data, and (vi) displaying a three-dimensional form of the route navigation symbol image, wherein (vii) the step of generating the route navigation symbol image includes the steps of generating a route navigation symbol data from the forward map data, and generating a route navigation symbol image from the route navigation symbol data.

According to a further aspect of the present invention, there is provided a program for making a computer execute a procedure for navigating a moving object, or a storage medium for storing the program. The procedure includes the steps of (i) acquiring a map data, (ii) acquiring a current position data, (iii) calculating an optimum route data from the map data, (iv) generating a forward map data from the current position data and the optimum route data, (v) generating a route navigation symbol image from said forward map data, and (vi) displaying a three-dimensional form of the route navigation symbol image, wherein (vii) the step of displaying the route navigation symbol image includes the steps of generating parallax beams to display the route navigation symbol image, and diffracting the parallax beams to display the route navigation symbol image.

Particular embodiments in accordance with this invention will now be described with reference to the accompanying drawings; in which:-
Fig. 1 is a schematic diagram of a moving object navigating apparatus showing one embodiment of the present invention;
Fig. 2 is an explanatory view explaining an action of a plane image displaying section in the moving object navigating apparatus of the embodiment;
Fig. 3 is an explanatory view explaining an action of a route navigation symbol image generating section in the moving object navigating apparatus of the embodiment;
Fig. 4 is an explanatory view explaining another action of the route navigation symbol image generating section in the moving object navigating apparatus of the embodiment;
Fig. 5 is an explanatory view explaining a further action of the route navigation symbol image generating section in the moving object navigating apparatus of the embodiment;
Fig. 6 is an explanatory view explaining a still further action of the route navigation symbol image generating section in the moving object navigating apparatus of the embodiment;
Fig. 7 is an explanatory view explaining an action of a stereoscopic image displaying section in the moving object navigating apparatus of the embodiment;
Fig. 8 is an explanatory view explaining an action of a parallax image displaying section in the moving object navigating apparatus of the embodiment;
Fig. 9 is an explanatory view explaining an action of the route navigation symbol image generating section in the moving object navigating apparatus of the embodiment;
Fig. 10 is an explanatory view explaining the overlapping of a virtual image with a real image;
Fig. 11 is an explanatory view explaining the overlapping of a navigation symbol image with the actual scenery background;
Fig. 12 is a schematic diagram showing another arrangement of the moving object navigating apparatus of the embodiment;
Fig. 13 is an explanatory view showing a visual distance modifying section in the embodiment;
Fig. 14 is a schematic diagram showing a conventional moving object navigating apparatus; and
Fig. 15 is an explanatory view explaining the overlapping of a virtual image with an actual image in the conventional moving object navigating apparatus.

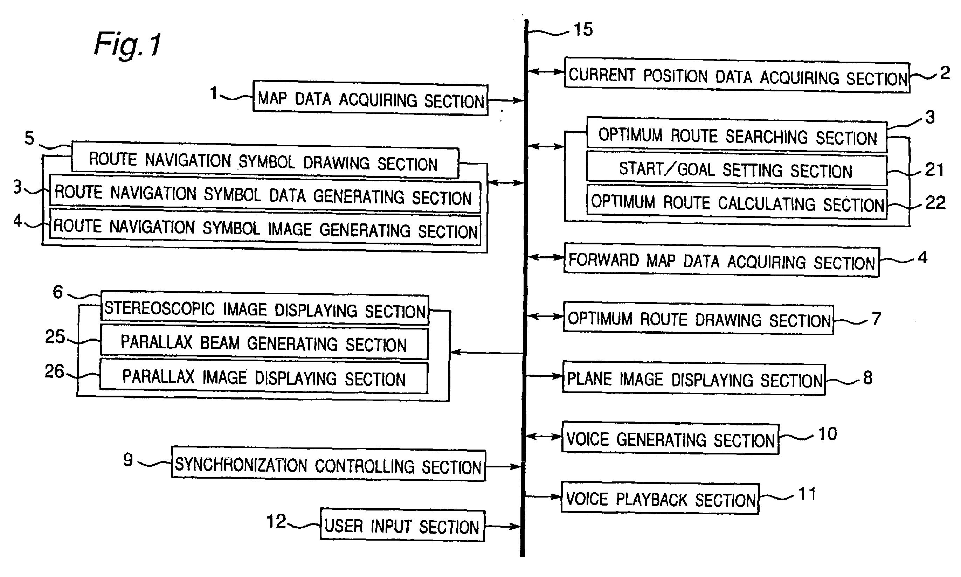

A moving object navigating apparatus according to the present invention will be described referring to Fig. 1.

Fig. 1 is a schematic view showing an arrangement of the moving object navigating apparatus of the embodiment. As shown in Fig. 1, the moving object navigating apparatus comprises a map data acquiring section (or means) 1, a current position acquiring section (or means) 2, an optimum route searching section (or means) 3, a forward map data acquiring section (or means) 4, a route data acquiring section (means) 4, a route navigation symbol drawing section (or means) 5, a stereoscopic image displaying section (or means) 6, an optimum route drawing section (or means) 7, a plane image displaying section (or means) 8, a synchronization controlling section (or means) 9, a voice generating section (or means) 10, a voice playback section (or means) 11, and a user input section (or means) 12. The sections (or means) are connected to each other by a data bus 15.

The map data acquiring section 1 acquires a map data. The current position acquiring section 2 acquires the current position of a moving object or a vehicle. The optimum route searching section 3 comprises a start/goal setting section (or means) 21 and an optimum route calculating section (or means) 22 and calculates an optimum route from the map data. The forward map data acquiring section 4 generates a forward map data from the current position data and the optimum route data. The route navigation symbol drawing section 5 comprises a route navigation symbol data generating section (or means) 23 and a route navigation symbol image generating section (or means) 24 and generates a route navigation symbol image from the forward map data. The stereoscopic image displaying section 6 comprises a parallax beam generating section (or means) 25 and a parallax image displaying section (or means) 26 and displays a stereoscopic image of a route navigation symbol which overlaps an actual scenery at the current position. The optimum route drawing section 7 generates a map image from the map data and an optimum route image from the optimum route data and combines the two images to have an optimum route composite image. The plane image displaying section 8 displays the optimum route composite image on a two-dimensional screen. The voice generating section 10 generates a navigation voice sound or an alarm sound from the forward map data. The voice playback section 11 reconstructs the navigation voice sound or the alarm sound. The synchronization controlling section 9 produces synchronization between the image displaying action of the stereoscopic image displaying section 6 and the plane image displaying section 8 and the voice generating action of the voice playback section 11. The user input section 12 is a means for allowing the user to entry data of the goal into the moving object navigating apparatus. The user may be a driver or a passenger of the vehicle. The start/goal setting section 21 determines the start point and the goal point of the route. The optimum route calculating section 22 generates an optimum route data from the start point and the goal point. The route navigation symbol data generating section 23 generates a route navigation symbol data from the forward map data. The route navigation symbol image generating section 24 generates a route navigation symbol image from the route navigation symbol data. The parallax beam generating section 25 generates parallax beams while displaying the route navigation symbol image. The parallax image displaying section 26 diffracts the parallax beams in given directions to generate a stereoscopic image.

The action of the moving object navigating apparatus having the above described arrangement will now be described in more detail.

The map data acquiring section 1 acquires a map data. The map data includes three dimensional information of a specific position such as the latitude, the longitude, and the altitude and relevant information attributed to the position such as landmarks and roads. More particularly, the attributed information includes road data such as the name of roads, the junction, and the traffic data and facility data such as the type, name, and description of facilities, landmarks, and buildings. The map data acquiring section 1 comprises a storage device such as a ROM for saving the map data and a read-out device. The read-out device may be used for reading the map data from the storage device. Alternatively, the map data acquiring section 1 may comprise a recording medium such as a CD-ROM or DVD-ROM and a recording medium playback device for reading the map data from the recording medium. Moreover, the map data acquiring section 1 may comprise a radio signal receiver and a storage device, where the map data is acquired from a database provided outside the vehicle by means of a radio communication device such as a mobile telephone and stored in the storage device. The map data stored in the storage device such as a ROM or the recording medium such as a CD-ROM remains unchanged before updated, thus containing no data of newly built roads. On the other hand, the map data acquiring section equipped with a radio signal receiver can receive update data over radio communication thus allowing its map data to be updated constantly. The map data from the map data acquiring section 1 is received by the optimum route searching section 3 and the optimum route drawing section 7.

The current position acquiring section 2 operates a positioning system such as GPS or gyro compass mounted in the vehicle for receiving the current position data. The current position acquiring section 2 may be equipped with a differential global positioning system for correcting the current position with the use of a position data generated at a local station of which the position is known, thus increasing the accuracy of the position data. The position data determined by the current position acquiring section 2 is transferred to the optimum route searching section 3 and the forward map data acquiring section 4.

The optimum route searching section 3 comprises a start/goal setting section 21 and an optimum route calculating section 22. The start/goal setting section 21 sets the start point and the goal point of the route with the current position data entered by the user operating the user input section 12 or determined by the current position acquiring section 2. The optimum route calculating section 2 determines an optimum route from a number of routes between the start point and the goal point and calculates an optimum route data including the time required for tracing the route and the distance of the route. The optimum route consists of en-route positions and an optimum direction vector at each position. The direction vector indicates the direction of movement at each en-route position in the optimum route. For example, an optimum route from the current position to home can be calculated for minimum time and distance from the map data determined by the map data acquiring section 1. The calculation may be conducted using a route searching algorithm such as Dijkstra's algorithm. The optimum route searching section 3 may refer a traffic jam data received from an external source such as the Vehicle Information and Communication System in addition to the position data of the start point and the goal point to determine at real time the optimum route data. The calculation of the optimum route based on the traffic jam data may be based on a weighted form of the Dijkstra's algorithm. The optimum route data determined by the optimum route searching section 3 is transferred to the forward map data acquiring section 4 and the optimum route drawing section 7.

The forward map data acquiring section 4 determines a forward map data from the current position data supplied by the current position acquiring section 2 and the optimum route data supplied by the optimum route searching section 3.

The acquiring of the forward map data in the forward map data acquiring section 4 will be explained. The forward map data acquiring section 4 is responsive to the current position data from the current position data acquiring section 2 for demanding a map data for N meters ahead from the current position and a direction data about the current position on the optimum route from the map data acquiring section 1. The N meter ahead map data and the direction data at the current position are regarded as the forward map data. N is a product of the moving speed and the time required for updating the current position data. The time required for updating the current position data is a duration of time from an action of updating the current position data to the next action of updating the current position data.

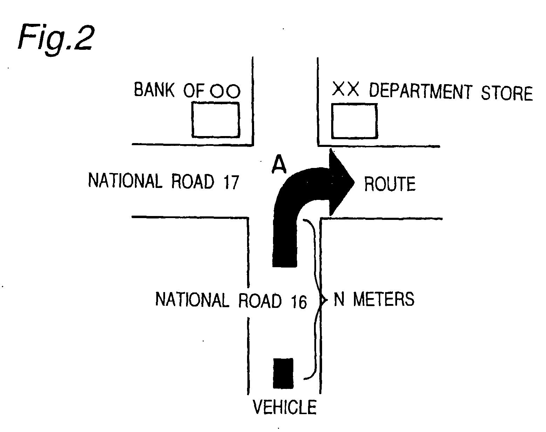

The forward map data is explained referring to Fig. 2. Fig. 2 illustrate a two-dimensional image displayed on the plane image displaying section 8 of the moving object navigating apparatus. The forward map data contains, for example, the latitude, longitude, and altitude of the current position, the name of a road, e.g. "National Road 16", the description of a junction, e.g. "Crossroads between National roads 16 and 17", traffic signs, e.g. "Stop at crossroads", the N meter ahead map data including the type and name of facilities, landmarks, and buildings, e.g. "Bank of OOO" and "XXX department Store", and the directional data, e.g. "Turn right at crossroads". Shown in Fig. 2 are the name of a road and the name of facilities.

Whenever the vehicle runs off the direction, the forward map data acquiring section 4 demands an updated forward map data. For example, in case that the optimum route is closed due to an accident, the vehicle has to detour and the forward map data acquiring section 4 demands an updated current position data from the current position data acquiring section 2 and an updated optimum route data from the optimum route searching section 3 to determine an updated forward map data. The updated forward map data from the forward map data acquiring section 4 is received by the route navigation symbol drawing section 5 and the voice playback section 10.

The route navigation symbol drawing section 5 comprises a route navigation symbol data generating section 23 for generating a route navigation symbol data from the forward map data determined by the forward map data acquiring section 4 and a route navigation symbol image generating section 24 for generating a route navigation symbol image, which consists of plural parallax images, from the route navigation symbol data.

The route navigation symbol data generating section 23 generates from the forward map data a route navigation symbol data which includes symbol model information, traffic sign identification display information, route direction identification display information, and view information.

The symbol model information is a stereoscopic symbol in a stereoscopic image displayed by the stereoscopic image displaying section 6. A characteristic example of the symbol model information in the route navigation symbol data is a car model with brake lamps, blinkers, and front lamps. The stereoscopic model may arbitrarily be determined as long as it exhibits route navigating effects such as brake lamps and blinkers and can easily be identified by the driver.

The traffic sign identification display information is to identify the traffic sign in the forward map data and provide its relevant message. For example, when the vehicle enters a school zone, the route navigation symbol data generating section 23 generates a traffic sign identification display information for displaying "brake-lamp flashing" in response to a traffic sign data "school zone=slow down". As the vehicle runs through a school zone, the route navigation symbol data generating section 23 instructs the driver to slow down with the traffic sign display information for displaying "brake-lamp flashing" in the route navigation symbol data in response to the traffic sign identification information in the forward map data.

The route direction identification display formation is to identify the route direction data in the forward map data and provide its relevant message. For example, when the vehicle arrives N meters before the crossroads and the route direction data in the forward map data indicates a display of "turning to right", the route navigation symbol data generating section 23 generates, in response to "turn to right at crossroads" of the route direction data, a route navigation symbol data which consists of a route direction identification display information for displaying "right blinker flashing" and a route direction identification display information for displaying "brake-lamp flashing" instructing the driver to slow down when turning to right at the crossroads. As the vehicle approaches a crossroads for turning to left or right, the route navigation symbol data generating section 23 exhibits the direction and instructs the driver to slow down with the route navigation symbol data including the route direction identification display information for displaying "blinker flashing" and "brake-lamp flashing", generated in response to the route direction data in the forward map data.

The view information is a distance between the current position and the forward position. The distance between the current position and the forward position may extend from the current position of the vehicle to a specific position on the optimum route such as a crossroads where the vehicle turns.

The route navigation symbol data includes symbol model, traffic sign identification display, route direction identification display, and other ambient information than the view information. The ambient information are the type and name of facilities, landmarks, and buildings in the forward map data, the remaining distance and time from the current position to the goal position calculated by the optimum route searching section 3, and the current direction of the vehicle.

The route navigation symbol data is generated from the route traffic sign and route direction data in the forward map data for providing traffic messages and indicating the direction. In case that the route is changed by the driver intentionally or accidentally or forced to detour by the event of an accident or a civil work, the current direction of the vehicle becomes different from the route direction data in the forward map data. Then, an alarm indicating the change is released and the route navigation symbol data is canceled. The optimum route searching section 3 repeats an action of determining an updated optimum route and the forward map data acquiring section 4 updates the forward map data. This is followed by the route navigation symbol data generating section 23 generating an updated route navigation symbol data from the updated forward map data. The updated route navigation symbol data determined by the route navigation symbol data generating section 23 is transferred to the route navigation symbol image generating section 24.

The route navigation symbol image generating section 24 generates a route navigation symbol image from the updated route navigation symbol data from the route navigation symbol data generating section 23.

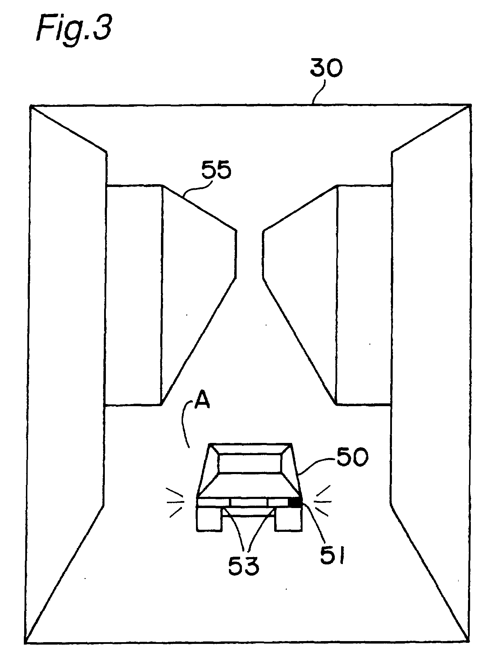

The action of the route navigation symbol image generating section 24 generating a route navigation symbol image will now be explained referring to Figs. 3, 4, 5, and 6. Figs. 3, 4, 5, and 6 are explanatory views showing stereoscopic images of the navigation symbols in the moving object navigating apparatus. For example, as the vehicle arrives N meters before the crossroads for turning to left or right, the route navigation symbol data generating section 23 generates a route navigation symbol data including a symbol model information for displaying "a model with blinkers and brake-lamps" and a route direction identification display information for displaying "blinker flashing" and "brake-lamp flashing" in response to the route direction data of the forward map data, indicating the direction and instructing the driver to slow down. Simultaneously, the route navigation symbol image generating section 24 generates a route navigation symbol image from the route navigation symbol data determined by the route navigation symbol data generating section 23. For example, when the vehicle arrives at the crossroads A for turning to right as shown in Fig. 3, the route navigation symbol image generating section 24 generates a route navigation symbol image 50 showing a car model with its right blinker 51 and brake lamps 53 flashing.

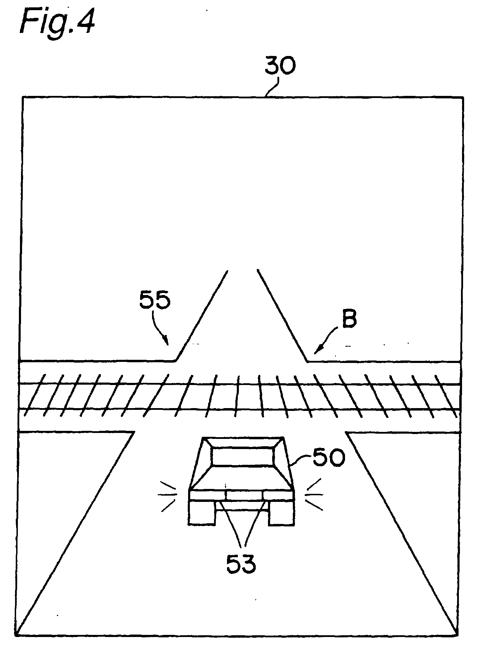

Alternatively, when the vehicle arrives N meters before a crossing for stop or crossroads for turning, the route navigation symbol data generating section 23 generates a route navigation symbol data including a symbol model information for displaying "a car model with brake lamps" and a traffic sign identification display information for displaying "crossing=stop" or "crossroads=stop" in response to the traffic sign data of the forward map data, instructing the driver to stop. Simultaneously, the route navigation symbol image generating section 24 generates a route navigation symbol image from the route navigation symbol data determined by the route navigation symbol data generating section 23. For example, when the vehicle arrives at the crossing B as shown in Fig. 4, the route navigation symbol image generating section 24 generates a route navigation symbol image 50 showing a car model with its brake lamps 53 flashing.

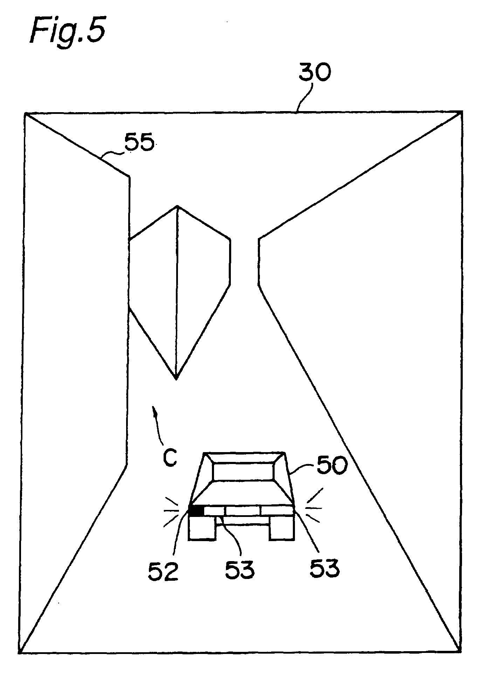

When the vehicle arrives N meters before an exist or a parking area of a highway on the route, the route navigation symbol data generating section 23 generates a route navigation symbol data including a symbol model information for displaying "a model with blinkers and brake-lamps" and a traffic sign identification display information for displaying "left blinker flashing" and "brake-lamp flashing" in response to the traffic sign data of the forward map data "highway exit=lane shift and slow down" or "parking area=lane shift and slow down", instructing the driver to exit or run off the highway. Simultaneously, the route navigation symbol image generating section 24 generates a route navigation symbol image from the route navigation symbol data determined by the route navigation symbol data generating section 23. For example, when the vehicle arrives at the highway exit C, as shown in Fig. 5, the route navigation symbol image generating section 24 generates a route navigation symbol image 50 showing a car model with its left blinker 52 and brake lamps 53 flashing.

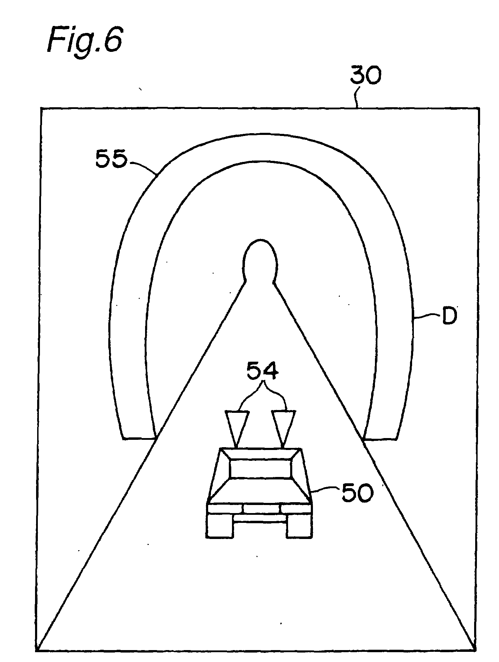

Alternatively, when the vehicle arrives N meters before the entrance of a tunnel, the route navigation symbol data generating section 23 generates a route navigation symbol data including a symbol model information for displaying "a car model with front lamps" and a traffic sign identification display information for displaying "tunnel=lamp illuminating" in response to the traffic sign data of the forward map data "front lamp illuminating", instructing the driver to switch the front lamps on. Simultaneously, the route navigation symbol image generating section 24 generates a route navigation symbol image from the route navigation symbol data determined by the route navigation symbol data generating section 23. For example, when the vehicle arrives at the entrance of a tunnel D as shown in Fig. 6, the route navigation symbol image generating section 24 generates a route navigation symbol image 50 showing a car model with its front lamps 54 illuminating. A stereoscopic form of the route navigation symbol image may be implemented by a three-dimension CG technique which provides a group of parallax images viewed by the driver. The route navigation symbol image generated by the route navigation symbol image generating section 24 is transferred to the stereoscopic image displaying section 6. While the route navigation symbol images 50 shown in Figs. 3, 4, 5, and 6 include symbol model information, traffic sign identification display information, and route direction identification display information, they may contain a variety of ambient data.

The stereoscopic image displaying section 6 comprises a parallax beam generating section 25 for generating parallax beams to display the route navigation symbol image and a parallax image displaying section 26 for implementing a display of a stereoscopic image of the route navigation symbol image by diffracting the parallax beams in given directions.

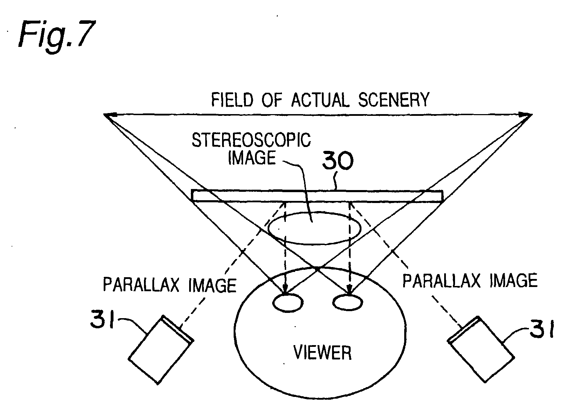

The stereoscopic image displaying section 6 may employ a holographic technology. The holographic technology is now explained. The holographic technology is based on a holographic optical element 30 (referred to as HOE 30 hereinafter) which has diffraction characteristics for allowing two eyes to perceive a pair of different images respectively. Referring to Fig. 7, two, left and right, liquid crystal display devices 31 (referred to as LCDs 31 hereinafter) produce a pair of parallax beams which are diffracted by the HOE 30 before received by two eyes of the driver. Accordingly, the image received by the driver exhibits a stereoscopic effect. As the HOE 30 diffracts desired wavelengths of light, it can develop a stereoscopic image at a high luminance with the transparency of an actual scenery image at the full range increased.

Since the HOE 30 is located stationary and the eyes of the driver remain generally in a constant position, the two LCDs 31 are disposed so that their parallax beams are diffracted by the HOE 30 and received by the left eye and the right eye respectively. Apparently, the number of the LCDs 31 is not limited to two. The two LCDs 31 limit a visible area where the route navigation symbol image is perceived as a stereoscopic image by the driver. For example, when the driver who can shift its face in a wide range is out of the stereoscopic visible area, it may fail to perceive the route navigation symbol image as a stereoscopic image. It will hence be possible to provide two or more stereoscopic visible areas. At least two LCDs 31 are needed for providing one stereoscopic visible area.

The stereoscopic image displaying section 6 using the holographic technology will now be explained.

The parallax beam generating section 25 may be implemented by LCDs 31. As optical images are produced by the LCDs 31, they emit parallax beams for developing a route navigation symbol image. The number of the parallax beam generating section 25 in the moving object navigating apparatus is 2n for generating the parallax beams to develop n route navigation symbol images. Also, n is the number of stereoscopic visible areas.

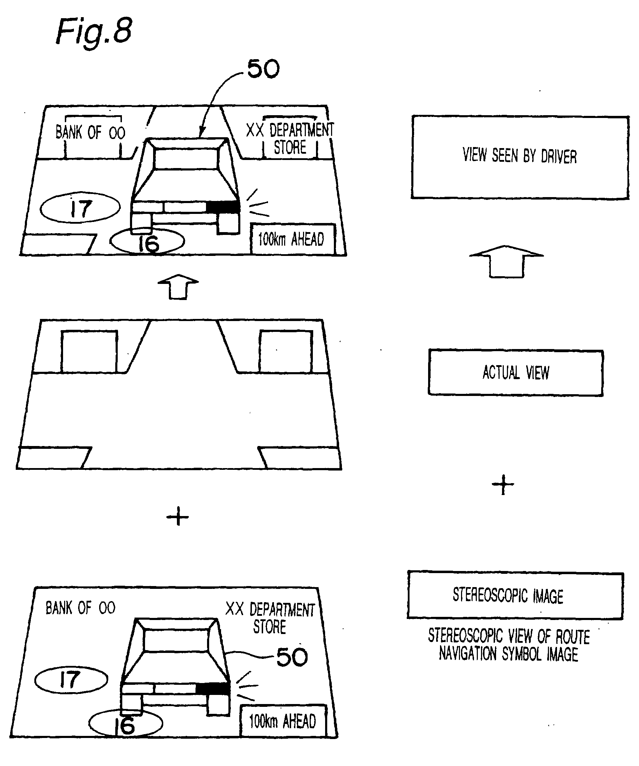

The parallax image displaying section 26 diffracts the parallax beams produced by their respective route navigation symbol images to allow both eyes of the driver to perceive two different images, whereby a stereoscopic image in combination with the background scenery at the current position such as shown in Fig. 8 can be developed. Fig. 8 illustrates a combination of the stereoscopic route navigation symbol image 50 and the actual scenery background which can be viewed by the driver. More particularly, the route navigation symbol image 50 contains the symbol model information, the traffic sign identification information, the route direction identification information, and the facility information including the remaining distance from the current position to the goal point determined by the optimum route searching section 3, the name of roads "National Road 16" and "National Road 17", the name of landmarks "Bank of 000" and "XXX Department Store".

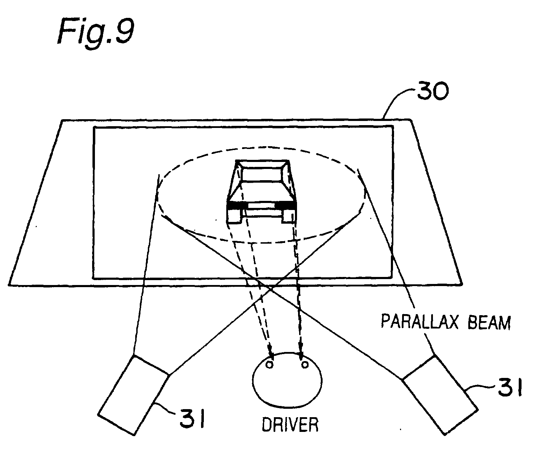

The stereoscopic image displaying section 6 may be implemented by an arrangement shown in Fig. 9. As shown in Fig. 9, the parallax beams of route navigation symbol images from the parallax beam generating section 25 are projected on a diffraction grating of a parallax image displaying section 26 such as an HOE 30 fabricated by the holographic technology. This develops a three-dimensional form of the route navigation symbol image which hardly interrupts the actual scenery background and can thus be viewed by the driver from behind. The parallax image displaying section 26 may be a front glass or highly light transmissive screen equipped with highly visually separable HOE 30.

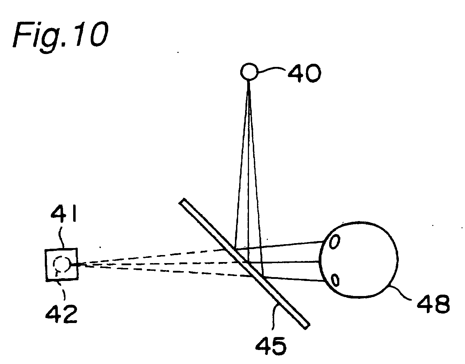

The overlapping between a virtual image and an actual scenery is explained. Fig. 10 is an explanatory view explaining a combination of the virtual image and the real image. As a viewer 48 watches an object 40 on a half mirror 45, it perceives a (virtual) object 42 as the object 40. This causes the object 40 reflected on the half mirror 45 to overlap an object 41 through the half mirror 45.

This theory is eligible when the half mirror 45, the object 40, the object 41, and the viewer 48 are replaced by the HOE 30, the route navigation symbol image 50, the actual scenery 55, and the driver respectively. Accordingly, the moving object navigating apparatus permits the route navigation symbol image 50 and the actual scenery 55 to be overlapped with each other as viewed through the HOE 30 by the driver, as apparent from Figs. 3, 4, 5, and 6.

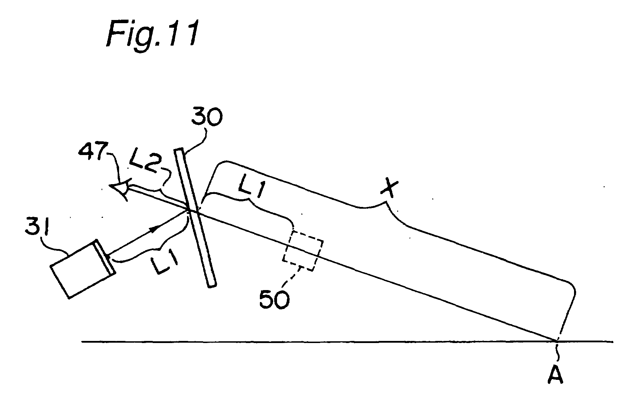

Also, the overlapping between a route navigation symbol image and an actual image will now be described referring to Fig. 11. It is assumed that the actual scenery is a crossroads A. Expressed by L1 is the distance between the LCD 31 and the HOE 30, L2 is the distance between the eye 47 of the driver and the HOE 30, and X is the distance between the HOE 30 and the crossroads A. When L1=X, the driver perceives that the route navigation symbol image 50 is at the crossroads A. It is however difficult for a small size of the vehicle to increase L1. The route navigation symbol image 50 is thus overlapped with the actual scenery background so that it appears across the line of view of the driver to the crossroads A. Preferably, the size of the route navigation symbol image 50 may be changed by modifying X. For example, if the size of the route navigation symbol image 50 is 1 with X=L3, it is expressed by S=(L1+L3)/(L1+L4) at X=L4. When L1 is significantly smaller than L3 or L4, the size can be approximated to S=L3/L4.

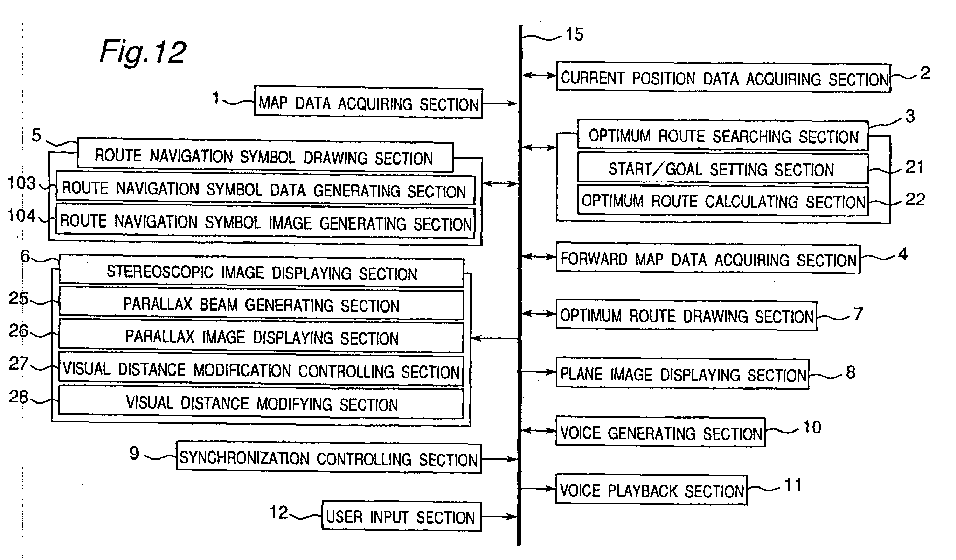

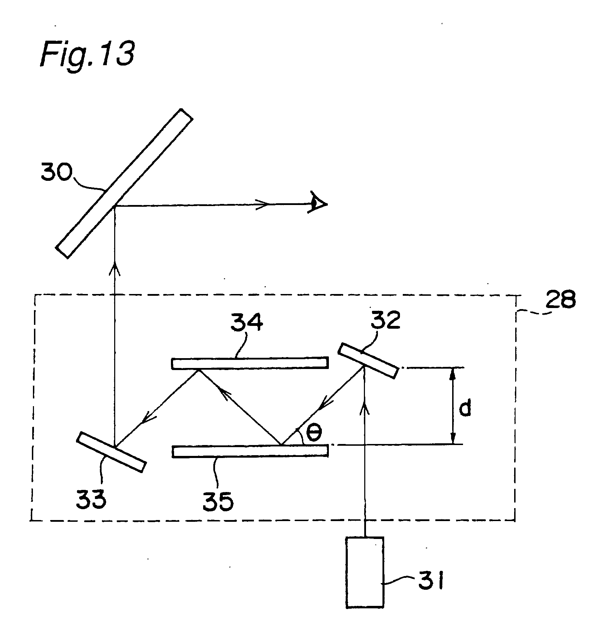

When L1 is increased to X, there may be provided a visual distance modifying section (or means) 28 between the LCD 31 and the HOE 3 and a visual distance modification controlling section (or means) 27 for controlling the action of the visual distance modifying section 28. Fig. 12 is a schematic view of a moving object navigating apparatus including the visual distance modifying section 28 and the visual distance modification controlling section 27. Fig. 12 is differentiated from Fig. 1 by the fact that the visual distance modifying section 28 and the visual distance modification controlling section 27 are added to the parallax beam generating section 25 and the parallax image generating section 26. Fig. 13 is an explanatory view illustrating the action of the visual distance modifying section 28. As shown, the visual distance modifying section 28 comprises variable reflection mirrors 32 and 33 and stationary reflection mirrors 34 and 35. Light emitted from the LCD 31 is directed to the variable reflection mirror 32 and its reflection from the variable reflection mirror 32 is received by the stationary reflection mirror 35. A reflection on the stationary reflection mirror 35 is received by the stationary reflection mirror 34. After the light is reflected m times between the tow stationary reflection mirrors 34 and 35, it is reflected on the variable reflection mirror 33. The reflected light from the visual distance modifying section 28 is then received by the HOE 30. The distance through which the light runs in the visual distance modifying section 28 is expressed by L=(m+1)d/sinθ+2d (m>0), where θ is the incident angle to the stationary reflection mirror 34 or 35 and d is the distance between the two stationary reflection mirrors 34 and 35. The visual distance modification controlling section 27 is arranged for turning the variable reflection mirrors 32 and 33 to change their angles and the values θ and m, thus modifying the distance L.

It is not simple to directly calculate the distance X from the HOE 30 to the crossroads. The distance X is generally equal to the distance from the current position of the vehicle to the crossroads which can easily be calculated. The distance from the current position of the vehicle to the crossroads means a distance from the current position to the location where the.route navigation symbol image 50 is displayed (referred to a virtual image displaying distance hereinafter) and can thus be calculated from the forward map data determined by the forward map data acquiring section 4. The forward map data from the forward map data acquiring section 4 is received by the visual distance modification controlling section 27. The visual distance modification controlling section 27 is responsive to the virtual image displaying distance from the forward map data for controlling the visual distance modifying section 28.

The optimum route drawing section 7 generates and combines a map image from the map data from the map data acquiring section 1 and an optimum route image from the optimum route data from the optimum route searching section 3 to have an optimum route composite image. The optimum route drawing section 7 may be implemented by the same manner as of a conventional moving object navigating apparatus. The optimum route composite image from the optimum route drawing section 7 is transferred to the plane image displaying section 8.

The plane image displaying section 8 display a two-dimensional form of the optimum route composite image generated by the optimum route drawing section 7. The plane image displaying section 8 may be implemented by a small-sized display of any type. The plane image displaying section 8 displays the plane image in synchronization with the stereoscopic image determined by the stereoscopic image displaying section. For example, when the vehicle arrives a crossroads, the plane image displaying section 8 displays a two-dimensional form of the optimum route composite image such as shown in Fig. 2 and simultaneously, the stereoscopic image displaying section 6 displays a three-dimensional form of the route navigation symbol image such as shown in Fig. 8.

The voice generating section 10 generates a voice sound for navigation or an alarm voice sound from the traffic sign data or the route direction data in the forward map data received from the forward map data acquiring section 4. For example, the voice generating section 10 generates a voice sound of "Slow down your car" in response to the traffic sign data indicating "slow down" as shown in Fig. 5. When the route direction data indicates "turn to right" as shown in Fig. 3, a voice sound of "Turn right N meters ahead" is released for navigation. Alternatively, when the vehicle runs off the route, an alarm sound "Your car runs off the route" is emitted. The navigating voice sound or alarm sound from the voice generating section 10 is received by the voice playback section 11.

The voice playback section 11 plays back the navigating voice sound or alarm sound from the voice generating section 10.

The synchronization controlling section 9 synchronizes the display of a three-dimensional form of the route navigation symbol image at the stereoscopic image displaying section 6 and the display of a two-dimensional form of the optimum route composite image at the plane image displaying section 8 with the playback of a navigating or alarm voice sound at the voice playback section 10. For example, when the vehicle arrives N meters before the crossroads where it is tuned to right, the synchronization controlling section 9 demands the stereoscopic image displaying section 6 to display a three-dimensional form of the route navigation symbol image 50 showing the right blinker 51 flashing (Fig. 3), simultaneously the plane image displaying section 8 to display a two-dimensional form of the optimum route composite image showing the current position, and the voice playback section 10 to emit a voice sound of the navigation data "Turn right N meters ahead".

The moving object navigating apparatus of this embodiment allows the route navigation symbol image 50 to be displayed in front of the driver by a known transmission type stereoscopic displaying technique while its relevant voice sound is released for navigation or alarming, whereby the driver can acknowledge the route without averting its eyes off. The moving object navigating apparatus instructs the driver in the direction and the traffic sign indication ahead of the vehicle. As the driver is instructed prior to its driving action, its task for examining the direction and controlling the vehicle can be eased thus improving the safety. Also, with the stereoscopic image, the plane image, and the emission of voice sounds synchronized in action, the driver can readily confirm the direction and the current position.

It is experimentally true that the driver can control its vehicle with much ease when following a leader car. The moving object navigating apparatus of this embodiment provides the route navigation symbol image 50 which includes the display of brake-lamp flashing, blinker flashing, and front lamp illumination to instruct the driver. This allows the driver to control the vehicle through following the instruction and enjoy ease of the driving.

The moving object navigating apparatus of this embodiment is applied to, but not limited to, an automobile. The moving object navigating apparatus may be installed and used in a two-wheel vehicle or a vessel or carried by an individual. The parallax image displaying section 26 is not limited to the front glass with the HOE 30 but may be in the form of a pair of goggles. While the moving object navigating apparatus employs the voice generating section 10 and the voice playback section 11 for playback of voice sounds for navigation or alarming, it may not provide a navigating action with voice sounds but with a combination of the stereoscopic image and the plane image.

The moving object navigating apparatus according to the present invention includes a map data acquiring section, a current position data acquiring section, an optimum route searching section, a forward map data acquiring section, a route navigation symbol drawing section, and a stereoscopic image displaying section, whereby a display of the route navigation can be implemented by a stereoscopic displaying technique. This allows an operator of the moving object to acknowledge the route of movement and the current position with much ease and relieve its navigating action during the driving.

The moving object navigating apparatus further includes an optimum route drawing section, a plane image displaying section, and a synchronization controlling section for producing a composite image of the stereoscopic image and the plane image. This also allows the operator of the moving object to perceive the route of movement and the current position with ease.

The moving object navigating apparatus further includes a voice generating section and a voice playback section for having voice sounds synchronized with the displayed image to provide a navigation or alarming effect. This allows the operator of the moving object to acknowledge the route of movement and the current position with much ease and relieve its navigating action during the driving.

The moving object navigating apparatus is arranged for displaying a three-dimensional form of the route navigation symbol image including a model of the moving object in order to instruct the operator of the moving object in the route of movement and the indication of traffic signs. This allows the operator to acknowledge the direction and the controlling action to be carried out and relieve its driving action.

The moving object navigating apparatus also has a stereoscopic image displaying section provided ahead of the operator which comprises a parallax beam generating section in the form of LCDs and a parallax image displaying section in the form of an HOE for displaying the route navigation image overlapped with the actual scenery. This allows the operator of the moving object to acknowledge the direction without averting its eyes off the route during the driving, thus improving the safety.

As described above, in the above-mentioned embodiments, the various information is provided to the operator as images by means of the image displaying section 4 such as a display or the like. However, the information may be provided to the operator by means of a mascot, a doll or a robot. In this case, the mascot, doll or robot may provide various information to the operator by actions of its hands, feet, tail, mouth, ears, eyes or the like. Further, the mascot, doll or robot may provide various information to the operator by its voice.

## Claims

1. An apparatus for navigating a moving object comprising:
a map data acquiring section for acquiring a map data;
a current position data acquiring section for acquiring a current position data;
an optimum route searching section for calculating an optimum route data from the map data received from said map data acquiring section;
a forward map data acquiring section for generating a forward map data from the current position data received from said current position data acquiring section and the optimum route data received from said optimum route searching section;
a route navigation symbol drawing section for generating a route navigation symbol image from the forward map data received from said forward map data acquiring section; and
a stereoscopic image displaying section for displaying a three-dimensional form of the route navigation symbol image generated by said route navigation symbol drawing section.

2. The apparatus according to claim 1, further comprising:
an optimum route drawing section for generating a map image from the map data received from said map data acquiring section, generating an optimum route image from the optimum route data received from said optimum route searching section, and combining the map image and the optimum route image to generate an optimum route composite image;
a plane image displaying section for displaying a two-dimensional form of the optimum route composite image received from said optimum route drawing section; and
a synchronization controlling section for synchronizing between said stereoscopic image displaying section and said plane image displaying section.

3. The apparatus according to claim 1, further comprising:
a voice generating section for generating a navigating voice sound or an alarming voice sound from the map data received from said forward map data acquiring section;
a voice playback section for playing back the navigating voice sound or the alarming voice sound received from said voice generating section; and
a synchronization controlling section for synchronizing between the voice sound playback action of said voice playback section and the image displaying action of said stereoscopic image displaying section.

4. The apparatus according to claim 2, further comprising:
a voice generating section for generating a navigating voice sound or an alarming voice sound from the map data received from said forward map data acquiring section; and
a voice playback section for playing back the navigating voice sound or the alarming voice sound received from said voice generating section, wherein
said synchronization controlling section synchronizes between the voice sound playback action of said voice playback section and the image displaying action of said stereoscopic image displaying section.

5. The apparatus according to claim 1, wherein said route navigation symbol drawing section comprises:
a route navigation symbol data generating section for generating a route navigation symbol data from the forward map data received from said forward map data acquiring section; and
a route navigation symbol image generating section for generating a route navigation symbol image from the route navigation symbol data received from said route navigation symbol data generating section.

6. The apparatus according to claim 1, wherein said stereoscopic image displaying section comprises:
a parallax beam generating section for generating parallax beams to display the route navigation symbol image generated by said route navigation symbol drawing section; and
a parallax image displaying section for diffracting the parallax beams generated by said parallax beam generating section to display the route navigation symbol image.

7. The apparatus according to claim 5, wherein said route navigation symbol data generating section generates from the forward map data received from said forward map data acquiring section a route navigation symbol data which consists mainly of symbol model information, traffic sign identification display information, moving direction identification display information, and visual field data.

8. The apparatus according to claim 7, wherein said route navigation symbol data generating section generates from the forward map data received from said forward map data acquiring section a route navigation symbol data which includes ambient information.

9. The apparatus according to claim 7 or 8, wherein the symbol model information in the route navigation symbol data generated by said route navigation symbol data generating section has a shape of said moving object for displaying a route navigation data.

10. The apparatus according to claim 5, wherein said route navigation symbol data generating section generates a route navigation symbol data which includes route direction identification information for instructing an operator of said moving object with the route direction data received from said forward map data acquiring section.

11. The apparatus according to claim 5, wherein said route navigation symbol data generating section generates a route navigation symbol data which includes traffic sign identification information for instructing an operator of said moving object with the traffic sign data in the forward map data received from said forward map data acquiring section.

12. The apparatus according to claim 5, wherein said route navigation symbol data generating section generates an updated route navigation symbol data when said moving object runs off the route determined by the optimum route data received from said optimum route searching section.

13. The apparatus according to claim 6, wherein said parallax beam generating section is a liquid crystal display unit and said parallax image displaying section is a holographic optical element.

14. The apparatus according to claim 6, wherein said stereoscopic image displaying section includes a group of parallax beam generating sections corresponding to the predetermined number of stereoscopic visible areas.

15. The apparatus according to claim 6, wherein said parallax image displaying section is a holographic optical element where parallax beams generated by said parallax beam generating section are diffracted and perceived in different modes by eyes of an operator of said moving object who can thus view the route navigation symbol image overlapped with an actual scenery background.

16. The apparatus according to claim 6, wherein said parallax image displaying section is disposed in front of said moving object or across a viewing line of the operator of said moving object.

17. A method of navigating a moving object comprising the steps of:
acquiring a map data;
acquiring a current position data;
calculating an optimum route data from said map data;
generating a forward map data from said current position data and said optimum route data;
generating a route navigation symbol image from said forward map data; and
displaying a three-dimensional form of the route navigation symbol image, wherein said step of generating said route navigation symbol image includes the steps of generating a route navigation symbol data from said forward map data, and generating a route navigation symbol image from said route navigation symbol data.

18. A method of navigating a moving object comprising the steps of:
acquiring a map data;
acquiring a current position data;
calculating an optimum route data from said map data;
generating a forward map data from said current position data and said optimum route data;
generating a route navigation symbol image from said forward map data; and
displaying a three-dimensional form of the route navigation symbol image, wherein said step of displaying said route navigation symbol image includes the steps of generating parallax beams to display said route navigation symbol image, and diffracting said parallax beams to display said route navigation symbol image.

19. A program for making a computer execute a procedure for navigating a moving object, said procedure comprising the steps of:
acquiring a map data;
acquiring a current position data;
calculating an optimum route data from said map data;
generating a forward map data from said current position data and said optimum route data;
generating a route navigation symbol image from said forward map data; and
displaying a three-dimensional form of the route navigation symbol image, wherein said step of generating said route navigation symbol image includes the steps of generating a route navigation symbol data from said forward map data, and generating a route navigation symbol image from said route navigation symbol data.

20. A program for making a computer execute a procedure for navigating a moving object, said procedure comprising the steps of:
acquiring a map data;
acquiring a current position data;
calculating an optimum route data from said map data;
generating a forward map data from said current position data and said optimum route data;
generating a route navigation symbol image from said forward map data; and
displaying a three-dimensional form of the route navigation symbol image, wherein said step of displaying said route navigation symbol image includes the steps of generating parallax beams to display said route navigation symbol image, and diffracting said parallax beams to display said route navigation symbol image.

21. A storage medium which can be read by a computer, storing a program for making the computer execute a procedure for navigating a moving object, said procedure comprising the steps of:
acquiring a map data;
acquiring a current position data;
calculating an optimum route data from said map data;
generating a forward map data from said current position data and said optimum route data;
generating a route navigation symbol image from said forward map data; and
displaying a three-dimensional form of the route navigation symbol image, wherein said step of generating said route navigation symbol image includes the steps of generating a route navigation symbol data from said forward map data, and generating a route navigation symbol image from said route navigation symbol data.

22. A storage medium which can be read by a computer, storing a program for making the computer execute a procedure for navigating a moving object, said procedure comprising the steps of:
acquiring a map data;
acquiring a current position data;
calculating an optimum route data from said map data;
generating a forward map data from said current position data and said optimum route data;
generating a route navigation symbol image from said forward map data; and
displaying a three-dimensional form of the route navigation symbol image, wherein said step of displaying said route navigation symbol image includes the steps of generating parallax beams to display said route navigation symbol image, and diffracting said parallax beams to display said route navigation symbol image.
